# EUROPÄISCHE PATENTANMELDUNG

(11) **EP 1 519 214 A1**
(43) Veröffentlichungstag der Anmeldung: **30.03.2005**
(21) Anmeldenummer: 04103789.6
(22) Anmeldetag: 06.08.2004
(51) Int. Cl.: G02B 27/01, G02B 27/28, G02F 1/13357

(54) **Head-Up-Display mit TFT-Panel und Polarisationskonverter**

(30) Priorität: 25.09.2003 DE 10344687
(71) Anmelder: SIEMENS AKTIENGESELLSCHAFT, 80333 München (DE)
(72) Erfinder: Breinich, Herbert, 65239, Hochheim (DE); Ludewig, Bernd, 69493, Hirschberg (DE); Mayer, Ralf, 67295, Bolanden (DE)

(57) **Zusammenfassung**

Head-Up-Display mit einem mittels einer Lichtquelle beleuchtbaren TFT-Display zum Einsatz in Kraftfahrzeugen, Flugzeugen oder Schiffen

Bei einem Head-Up-Display mit einem mittels einer Lichtquelle beleuchtbaren TFT-Display zum Einsatz in Kraftfahrzeugen, Flugzeugen oder Schiffen, wobei die Lichtstrahlen des in dem TFT-Display erzeugten Bildes über eine Optik auf eine Frontscheibe gelangen, ist vorgesehen, dass zwischen der Lichtquelle (1, 5) und dem TFT-Display (3) ein Polarisationskonverter (2) angeordnet ist.

## Beschreibung

Die Erfindung betrifft ein Head-Up-Display mit einem mittels einer Lichtquelle beleuchtbaren TFT-Display zum Einsatz in Kraftfahrzeugen, Flugzeugen oder Schiffen. Aus dem Stand der Technik sind derartige Head-Up-Displays bekannt, wobei die Lichtstrahlen des in dem TFT-Display erzeugten Bildes über eine Optik auf eine Frontschreibe gelangen und als virtuelles Bild vor, hinter oder in der Frontscheibe wahrnehmbar sind. Damit das virtuelle Bild gut wahrnehmbar ist, insbesondere bei heller Umgehungsbeleuchtung wie bei strahlendem Sonnenschein, ist es erforderlich, das Bild mit einer großen Lichtstärke zu erzeugen, so dass es unter allen Umständen gut wahrnehmbar ist.

Aufgabe der vorliegenden Erfindung ist es daher, die Lichtstärke des auf dem TFT-Display erzeugten Bündels zu erhöhen. Erfindungsgemäß wird diese Aufgabe dadurch gelöst, dass zwischen der Lichtquelle und dem TFT-Display ein Polarisationskonverter angeordnet ist. Dieser Polarisationskonverter bringt das Licht der Lichtquelle in eine einzigen Polarisationsebene, hierdurch erreicht das von der Lichtquelle ausgesandte Licht fast vollständig den in dem TFT-Display enthaltenen Flüssigkristall. Bei dem üblicherweise TFT-Display vorhandenen Polarisationsfiltern auf beiden Seiten der Flüssigkristalle wird bei nicht polarisiertem Licht nur die Hälfte des von einer Lichtquelle ausgesandten Lichtes hindurch gelassen. So wird durch den Polarisationskonverter die mit einer bestimmten Lichtquelle erreichbare Helligkeit theoretisch verdoppelt. Dadurch dass der Polarisationskonverter zwischen der Lichtquelle und dem TFT-Display angeordnet ist, kann bei dem TFT-Display auf der dem Polarisationskonverter zugewandten Seite auf den Polarisationsfilter verzichtet werden. Eine besonders dauerhafte Lichtquelle wird dadurch erreicht, dass sie aus einer Vielzahl von Leuchtdioden (LED's) besteht. Diese Leuchtdioden werden von vorzugsweise matrixförmig angeordnet. Es ist auch möglich, als Lichtquelle eine Halogenlampe vorzusehen. Diese weist eine große Helligkeit und einen günstigen Preis auf, hat jedoch den Nachteil, dass ihre Lebensdauer begrenzt ist und deshalb beim Einsatz in einem Kraftfahrzeug, Flugzeug oder Schiff auswechselbar ausgestaltet sein muss. Durch eine Kühlvorrichtung der Lichtquelle wird zum einen eine besonders hohe Lichtleistung der Lichtquelle möglich, zum anderen wird durch die Kühlvorrichtung die Lebensdauer der Lichtquelle verlängert. Eine Optik aus einem oder mehreren reflektiven Elementen reduziert die Lichtstärke des projizierten Bildes am geringsten. Besonders einfach lassen sich die reflektiven Elemente als Spiegel ausgestalten, die entsprechend der Frontscheibe angepasst sind.

Die Erfindung wird nachfolgend anhand der Figuren näher erläutert.

Es zeigen:
- Fig. 1:: ein Ausführungsbeispiel eines Head-Up-Displays zum Einsetzen in einem Kraftfahrzeug im Querschnitt,
- Fig. 2:: die Aufsicht auf eine besonders bevorzugte Lichtquelle.

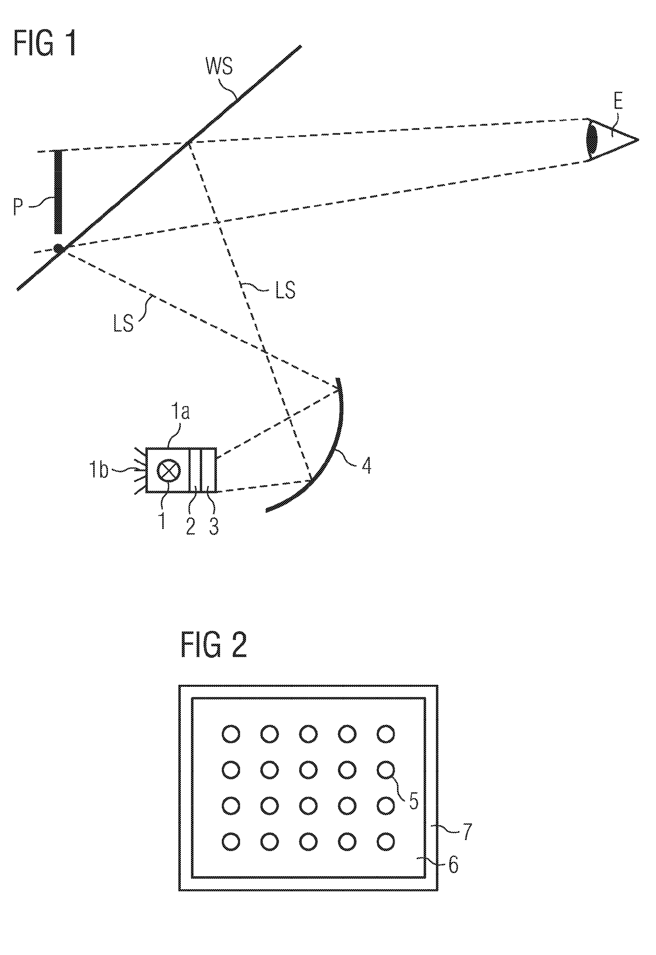

In Fig. 1 erkennt man eine Lichtquelle 1 mit einem Gehäuse 1a mit Kühllamellen 1b, einen Polarisationskonverter 2, ein TFT-Display 3, einen Spiegel 4 und eine Frontscheibe in Form einer Windschutzscheibe WS. Das in der Lichtquelle 1 erzeugte Licht wird im Polarisationskonverter 2 derart ausgerichtet, dass in einer einzigen Polarisationsebene schwingt und gelangt so durch das TFT-Display 3 auf dem Spiegel 4. Je nachdem, wie das TFT-Display 3 angesteuert wird können verschiedene Bilder erzeugt werden. Die Lichtstrahlen dieser Bilder, von denen beispielhaft zwei Lichtstrahlen LS dargestellt sind, werden vom Spiegel reflektiert und gelangen auf die Windschutzscheibe. In dem Bereich, in dem die Lichtstrahlen LS auf die Windschutzscheibe treffen, ist ein Keil eingearbeitet, so dass ein Kraftfahrer, dessen Auge mit E gekennzeichnet ist, ein Bild P außerhalb der Windschutzscheibe wahrnehmen kann. Anstelle eines einzigen Spiegels 4 können auch mehrere Spiegel verwendet werden, um den Strahlengang, den die Lichtstrahlen LS nehmen, zu falten und dadurch ein möglichst kompaktes Head-Up-Display herzustellen.

In Fig. 2 erkennt man Leuchtdioden 5, die matrixförmig auf einer Leiterplatte 6 angeordnet sind. Unterhalb der Leiterplatte befindet sich ein Kühlkörper 7 aus einem gut wärmeleitenden Material, der beispielsweise mit einer nicht dargestellten Kühlerventilator zusätzlich abgekühlt werden kann und so die Leuchtdioden 5 abkühlt.

## Patentansprüche

1. Head-Up-Display mit einem mittels einer Lichtquelle beleuchtbaren TFT-Display zum Einsatz in Kraftfahrzeugen, Flugzeugen oder Schiffen, wobei die Lichtstrahlen des in dem TFT-Display erzeugten Bildes über eine Optik auf eine Frontscheibe gelangen, **dadurch gekennzeichnet, dass** zwischen der Lichtquelle (1, 5) und dem TFT-Display (3) ein Polarisationskonverter (2) angeordnet ist.

2. Head-Up-Display nach Anspruch 1, **dadurch gekennzeichnet, dass** das TFT-Display (3) auf der dem Polarisationskonverter (2) zugewandten Seite keinen Polarisationsfilter aufweist.

3. Head-Up-Display nach einem der vorstehenden Ansprüche, **dadurch gekennzeichnet, dass** die Lichtquelle (1, 5) aus einer Vielzahl von Leuchtdioden (5) besteht.

4. Head-Up-Display nach Anspruch 3, **dadurch gekennzeichnet, dass** die Leuchtdioden (5) matrixförmig angeordnet sind.

5. Head-Up-Display nach Anspruch 1 oder 2, **dadurch gekennzeichnet, dass** die Lichtquelle (1) eine Halogenlampe aufweist.

6. Head-Up-Display nach einem der vorstehenden Ansprüche, **dadurch gekennzeichnet, dass** die Lichtquelle eine Kühlvorrichtung (1b, 7) aufweist.

7. Head-Up-Display nach einem der vorstehenden Ansprüche, **dadurch gekennzeichnet, dass** die Optik aus einem oder mehreren reflektiven Elementen (4) aufgebaut ist.

8. Head-Up-Display nach Anspruch 7, **dadurch gekennzeichnet, dass** die reflektiven Elemente (4) als asphärische Spiegel (4) ausgestaltet sind.
